Europäisches Patentamt

European Patent Office

Office européen des brevets

(19)

(11) Publication number: **0 189 192**
**A1**

(12) **EUROPEAN PATENT APPLICATION**

(21) Application number: **86100834.0**

(22) Date of filing: **22.01.86**

(51) Int. Cl.⁴: **H 04 L 11/16**

(30) Priority: **24.01.85 US 694501**

(43) Date of publication of application: **30.07.86**
**Bulletin 86/31**

(84) Designated Contracting States: **BE DE FR GB IT NL SE**

(71) Applicant: **BURROUGHS CORPORATION (a Delaware corporation), Burroughs Place, Detroit Michigan 48232 (US)**

(72) Inventor: **Osman, Fazil Ismet, 960 Begonia Street, Escondido, CA 92027 (US)**
Inventor: **Perloff, Ronald Stephen, 17040 Oculto Court, San Diego, CA 92127 (US)**

(74) Representative: **Eisenführ & Speiser, Martinistrasse 24, D-2800 Bremen 1 (DE)**

(54) **Method of operating a two-wire local area network such that marginal components in the secondary loop are located.**

(57) A method of operating a local area network of the type that has a plurality of stations which are serially intercoupled in primary and secondary loops includes the steps of: circulating all messages around the primary loop in a first direction through respective primary transmitters, primary receivers, and primary cabling in each station during one set of spaced apart time intervals; and circulating all messages around the secondary loop in an opposite direction through respective secondary transmitters, secondary receivers, and secondary cabling in each station during another set of time intervals that are interleaved with the one set. As the messages circulate in the primary and secondary loops, they pass through a single transient error detector circuit in each station. This locates marginal components and ensures a reliable loopback mode of operation when a component fails completely.

-1-

METHOD OF OPERATING A TWO-WIRE LOCAL AREA NETWORK SUCH
THAT MARGINAL COMPONENTS IN THE SECONDARY LOOP ARE LOCATED

BACKGROUND OF THE INVENTION

This invention relates to local area networks; and more particularly, it relates to methods of sending messages in a two-wire network such that the location of marginal components in the secondary loop can be found.

In a two-wire local area network, a plurality of stations are serially intercoupled in oppositely oriented primary and secondary loops. Each station on the network has a primary transmitter, a primary receiver, a secondary transmitter, and a secondary receiver. Primary cables interconnect the primary transmitter and primary receiver of each station in serial fashion to form the primary loop in a first direction; and secondary cables interconnect the secondary transmitter and secondary receiver of each station in an opposite direction to form the secondary loop.

Conventional practice of the prior art is to use just the primary components and to circulate all messages through the network in just the first direction so long as all of the primary components are operable. Then, if a break occurs in one of the primary components, the station that receives messages on one side of the break passes those messages to the station on the other side of the break by using the secondary components in what is called a "loopback" mode.

During loopback, messages travel from station to station through the primary components until they can proceed no further because of the broken primary component. Then the messages reverse direction and travel by way of the secondary components back through the entire network until they reach the station on the other side of the fault. There, the messages again reverse direction and continue traveling from station to station through the primary components.

Ideally, loopback will always enable the network to operate while the faulty primary component is being repaired. However, a problem with the loopback mode of operation occurs when any one of the secondary components in any one of the stations is marginal and acts as an intermittent or transient noise source.

As messages pass through a marginal secondary component, errors are intermittently introduced. Each erroneous message then passes through all the stations that follow the marginal component until it reaches the station which is adjacent the broken primary component. There the error is detected.

Detection of the error in that station, however, does not readily enable the replacement of the marginal secondary component since it could be located in any one of the preceding stations. This is particularly troublesome when the number of stations on the network is large, or the cabling between stations is inaccessible (e.g., in the walls of a building).

Sophisticated error detection circuitry could of course be added to the secondary components of each station to check the messages that pass through those components for errors. However, having such error detection circuitry in each station is not feasible in stations where low cost is the primary consideration.

Instead in the prior art, it is common practice to check the secondary components by sending a carrier frequency from station to station over the secondary loop while the primary components are fully operational and merely check for loss of carrier in each station. This locates secondary components that are completely inoperable. But it does not even detect components that are only marginal and which intermittently distort or corrupt various cycles of the carrier.

Accordingly, a primary object of the present invention is to provide a novel method of sending messages through a local area network whereby marginal components in the secondary loop are detected and located.

## BRIEF SUMMARY OF THE INVENTION

The above object and others are achieved in the present invention in a local area network of the type that includes a plurality of stations which are serially intercoupled in primary and secondary loops. Each station has a primary transmitter, a primary receiver, a secondary transmitter, and a secondary receiver. Primary cables couple the primary transmitters of the stations to the primary receivers such that the stations are serially intercoupled in the primary loop in a first direction, and secondary cables couple the secondary transmitters of the stations to the secondary receivers such that the stations are serially intercoupled in the secondary loop in a second direction opposite to the first direction.

All messages on the network are circulated during one set of spaced apart time intervals in the first direction through the primary transmitters, primary receivers,

-4-

and primary cables. During another set of spaced apart time intervals that are interleaved with the one set, all messages on the network are circulated in the opposite direction through the secondary transmitters, secondary receivers, and secondary cables. A single error detection circuit is provided in each station; and all messages that circulate in the first direction are routed through that circuit to check for marginal primary components, while all messages that circulate in the opposite direction are also routed through the same error detection circuit to check for marginal secondary components.

## BRIEF DESCRIPTION OF THE DRAWINGS

Various features and advantages of the invention are described in the Detailed Description in conjunction with the accompanying drawings wherein:

Figures 1A and 1B illustrate a method of transmitting messages in a local area network in accordance with the present invention;

Figure 2 illustrates the prior art loopback mode of operation of a local area network;

Figures 3A-3F illustrate a preferred sequence by which the mode of operation of a local area network switches from that of Figure 1A to that of Figure 1B;

Figure 4 illustrates the loopback mode of operation for a local area network that was transmitting messages in the configuration of Figure 1B; and

Figure 5 illustrates a preferred architecture for the stations of the preceding figures.

## DETAILED DESCRIPTION OF THE INVENTION

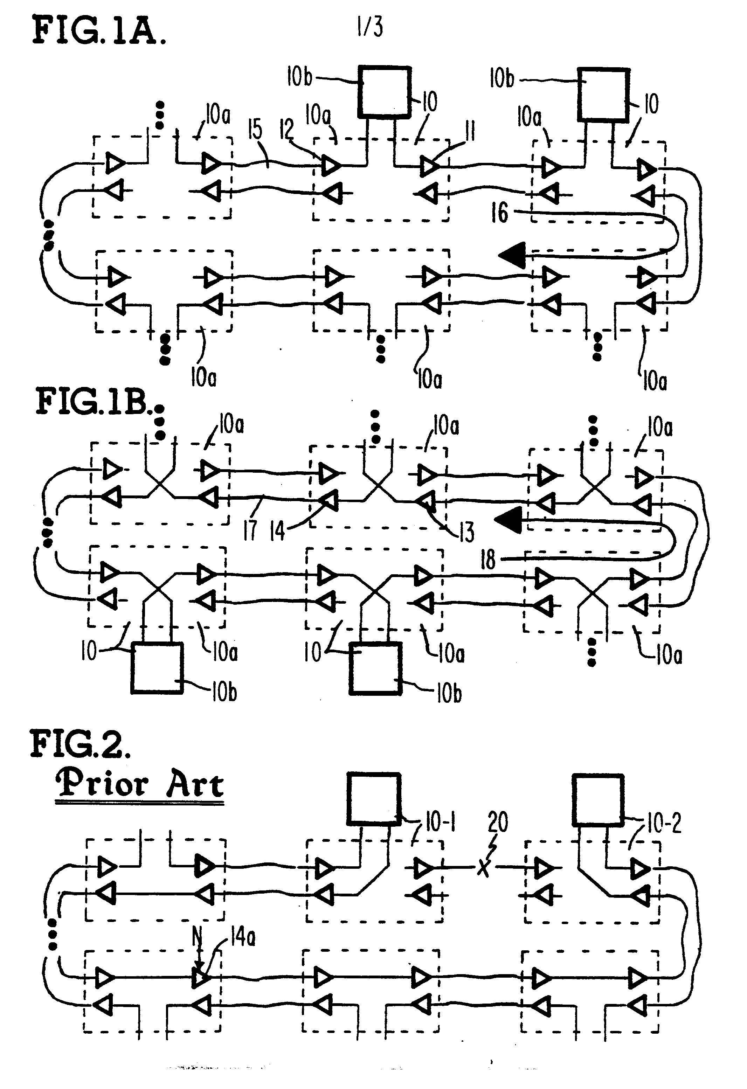

Referring now to Figures 1A and 1B, a method of operating a local area network in accordance with the present invention will be described. This local area network is of the type that includes a plurality of terminals or stations 10 that transmit and receive messages to each other in primary and secondary loops.

In Figures 1A and 1B, reference numeral 10a indicates the portion of each station which contains a primary transmitter 11, a primary receiver 12, a secondary transmitter 13, and a secondary receiver 14. Primary cables 15 interconnect the primary transmitters and receivers of adjacent stations such that all the stations are serially intercoupled in the primary loop 16. Also, secondary cables 17 serially interconnect the secondary transmitters and receivers of adjacent stations such that they form the secondary loop 18 in an opposite direction.

In accordance with the present invention, all messages on the network are circulated during one set of spaced apart time intervals through the primary transmitters and receivers around loop 16. Portion 10b of each station receives messages from the network via the primary receiver 12, transmits messages to the network via the primary transmitter 11, and checks messages for errors. This is illustrated in Figure 1A.

Conversely, during another set of time intervals that are spaced apart and interleaved with the first set, all messages on the network are passed through the secondary transmitters and receivers and circulated around loop 18. Portion 10b of each station receives messages from the network via the secondary receiver 13, transmits messages to the network via the secondary transmitter 14, and checks messages for errors. This is illustrated in Figure 1B.

In other words, with the present invention the internal coupling within a station between its transmitters and receivers periodically changes from the configuration of Figure 1A to that of Figure 1B, and vice versa. Preferably, the configuration changes at a rate that is one hundred times slower than the expected or allowable error rate for messages on the network.

To appreciate the significance of the above described method of operation, reference should now be made to Figure 2. It illustrates how the secondary components (i.e., the secondary transmitters, secondary receivers, and secondary cables) are used to carry messages in the prior art. There, messages circulate around the primary loop until a primary component becomes broken. Reference numeral 20 indicates a break in the primary cable.

To bypass such a break, the prior art uses the secondary components in a "loopback" mode wherein messages from a station 10-1 on one side of the break 20 are passed through all of the secondary components until they reach the station 10-2 on the other side of the break 20. This enables messages to continue flowing through the network while the broken component 20 is repaired.

A problem, however, with the above described prior art use of the secondary components is that the location of an intermittent or transient noise source in them cannot be determined. In Figure 2, the letter N represents an intermittent noise source in one of the secondary transmitters 14a. Such a noise source may occur, for example, due to a deterioration of the transmitter over time or due to a weakening of the coupling between the transmitter and its secondary cabling.

Messages that pass through transmitter 14a and get corrupted by the noise N are subsequently received by station 10-2 whereupon the error is detected by the station's error detection circuitry. However, since the source of the noise could be any one of the secondary components in any station, station 10-2 cannot give any indication of where repair work is needed.

This problem is particularly troublesome when the total number of stations on the network is large, (i.e., more than 50); or when access to the cabling between the stations is cumbersome (i.e., when the cabling is inside the walls of a building). Also, the above problem is likely to occur rather frequently when the transmitters and receivers are electro-optical devices and the cables are glass fiber since the respective light-emitting, light-detecting, and light-transmitting properties of those components deteriorate with age.

All of these problems are overcome, however, when the configuration of the network switches between that of Figures 1A and 1B. When the network has the configuration of Figure 1A, the error detect/correct circuitry in each station checks the integrity of the primary components that link it to the next adjacent station. Likewise, when the network has the configuration of Figure 1B, the same error correcting circuitry in each station checks the integrity of the secondary components that link it to the next adjacent station.

If an error in a message is detected by a station, that station writes a flag bit in the message which indicates the presence of the error. Both the erroneous message and error flag are passed on to the next station. Alternatively, the station that detects an error may correct it before passing the message onto the next station. In either case, since the station that first receives the error is known, the location of the error causing components is also known.

Turning now to Figures 3A thru 3F, a preferred process for switching the configuration of the network from that of Figure 1A to that of Figure 1B, and vice versa, will be described in detail. In this process, a selected one of the stations (herein called station "M") periodically sends a predetermined message to all of the other stations on the network. This predetermined message is indicated in Figures 3A-3F by the letters "SW" which stand for a "switch" message.

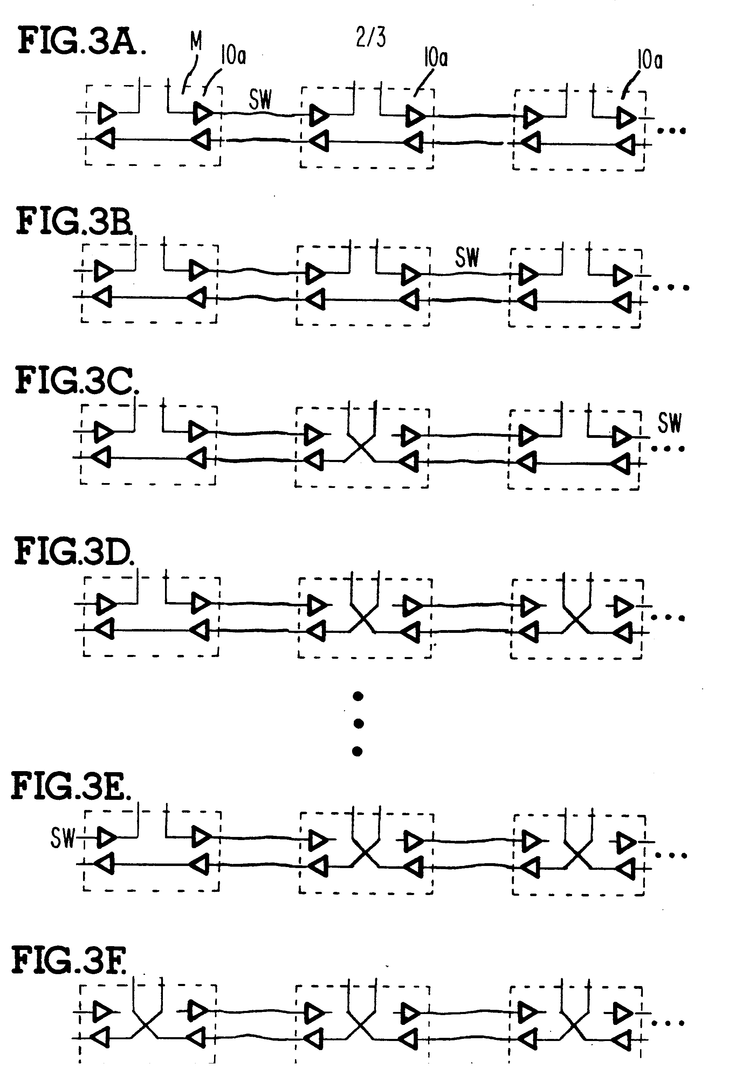

Each station that receives the switch message passes the message on to the next adjacent station and then changes the internal coupling of its transmitters and receivers. If the station's transmitters and receivers were internally coupled as in Figure 1A when it received the switch message, then it changes the coupling to that of Figure 1B, and vice versa. Figures 3A, 3B, 3C, and 3D illustrate this switching process for two of the stations on the network. This illustrated switching process continues until the switch message passes all the way around the network and is received by station M. Then, station M changes the internal coupling of its transmitters and receivers and the switching process is complete. This is illustrated in Figures 3E and 3F.

Suppose now that a network is repeatedly switching between the configurations of Figure 1A and 1B; and while it is in the Figure 1A configuration, a break occurs in one of the primary components. In that event, the network switches from the configuration of Figure 1A to that of Figure 2. No transient noise sources will occur on the Figure 2 configuration since all of the secondary components were previously tested while the network was operating in the Figure 1B configuration.

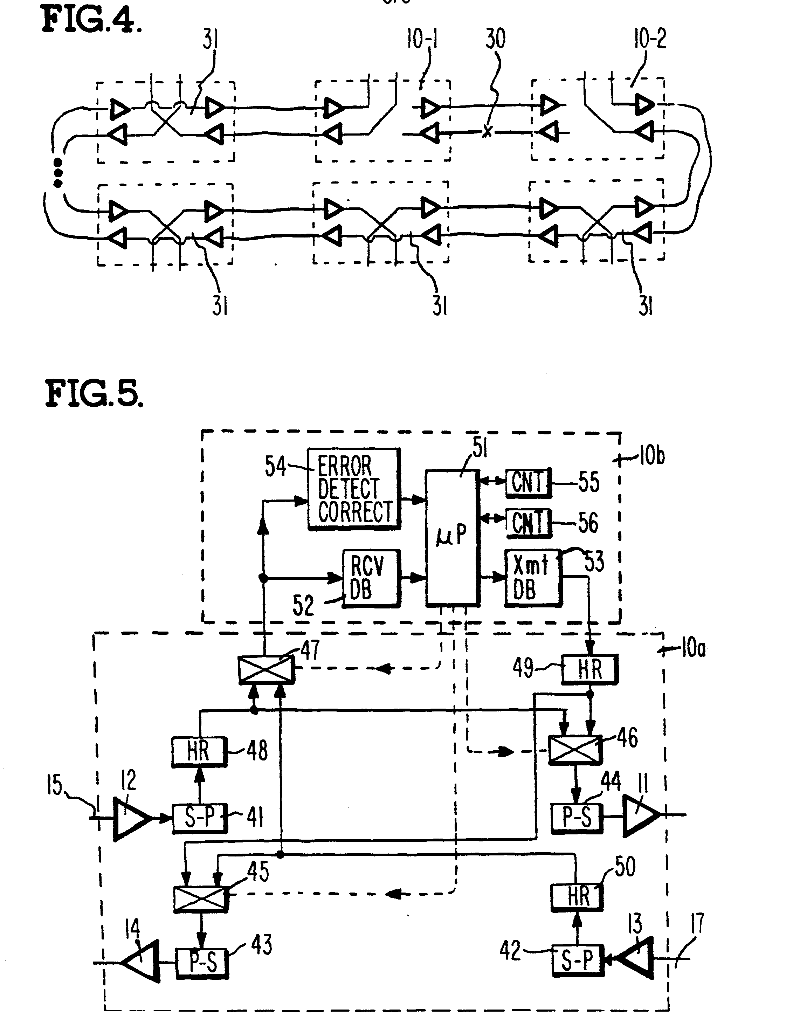

Next, suppose that the network is repeatedly switching between the configuration of Figures 1A and 1B; and while it is in the Figure 1B configuration, a break occurs in one of the secondary components. Under that condition, the network can still transmit messages by switching to the configuration of Figure 4. There, reference numeral 30 indicates a break in the secondary cabling between the pair of stations 10-1 and 10-2.

-9-

In Figure 4, the internal coupling between a station's transmitters and receivers is the same as that of Figure 1B with the following exceptions. Firstly, the two stations which are adjacent the broken component 30 "loop back" the messages that they receive. Secondly, all the remaining stations on the network have their primary transmitters and receivers internally coupled together via coupling 31.

Turning now to Figure 5, a preferred architecture for each of the stations on the network will be described in detail. In Figure 5, reference numeral 10a indicates that portion of the station which was shown in the preceding figures as including transmitters and receivers 11 thru 14. Additional components in block 10a include serial-parallel registers 41 and 42, parallel-serial registers 43 and 44, 2:1 multiplexers 45, 46 and 47, and holding registers 48, 49, and 50. All of these components are interconnected as illustrated in Figure 5.

Portion 10b of the Figure 5 station includes a microprocessor 51, a first in first out data buffer 52 for temporarily storing data that is received from the network, and a first in first out data buffer 53 for temporarily storing data that is transmitted to the network. Also it includes an error detection and correction circuit 54, and a pair of counters 55 and 56. All of these components are interconnected as illustrated in Figure 5.

When a network of stations is operated in the Figure 1A configuration, messages flow through each station as follows. Messages on the primary cable 15 sequentially pass through components 12, 41, 48, 46, 44, and 11. At the same time, those messages pass through components 47 and 54 whereupon they are checked for transient errors. If the error detection circuit 54 detects an error and an error flag is not set at the end of the message, then microprocessor 51 sets the error flag. This is achieved by sending the error flag through components 53, 49, 46, 44 and 11.

For each message that the Figure 5 station receives, it increments counter 55 by one. And, for each message that the Figure 5 station receives in error with no error flag set, it increments counter 56 by one. Periodically, microprocessor 51 examines the content of the counters 55 and 56, and if the frequency with which messages are received in error exceeds a predetermined limit, microprocessor 51 sets an indicator for an operator showing that preventive maintenance is needed.

Similarly, when the network of stations is operated in the Figure 1B configuration, messages flow through components 13, 42, 50, 45, 43 and 14. At the same time, those messages flow through components 47 and 54 whereupon they are checked for transient errors. If an error is detected by circuit 54 and the message error flag is not set, microprocessor 51 increments counter 56 by one, and it sets the error flag by means of components 53, 49, 54, 43, and 14.

A station on the network may also operate to correct errors in the messages that it detects rather than send an error flag at the end of the message. In that mode of operation, messages on the primary cabling pass through each station by way of components 12, 41, 48, 47, 52, 53, 49, 46, 44, and 11. Similarly, messages on the secondary loop pass through each station by way of components 13, 42, 50, 47, 52, 51, 53, 49, 44, 43, and 14. Messages with errors are temporarily stored in buffers 52 and 53, so errors in them can be both detected and corrected by circuit 54.

All of the steps of the invention and a station for carrying out those steps has now been described in detail. In addition, however, many changes and modifications can be made to these details without departing from

-11-

the nature and the spirit of the invention. For example, many different types of error detecting and/or correcting circuits and processes can be used. Several suitable ones are described in the book ERROR CONTROL CODING: Fundamentals and Applications by Shu Lin and Daniel J. Costello, Jr., published in 1983 by Prentice-Hall, Inc.

Accordingly, it is to be understood that the invention is not limited to those details but is defined by the appended claims.

WHAT IS CLAIMED IS:

1.      A method of operating a local area network of the type that includes a plurality of stations; each station having a primary transmitter, a primary receiver, a secondary transmitter, and a secondary receiver; said network also including a primary cabling means coupling the primary transmitters of said stations to the primary receivers such that said stations are serially intercoupled in a primary loop in a first direction, and a secondary cabling means coupling the secondary transmitters of said stations to the secondary receivers such that said stations are serially intercoupled in a secondary loop in a second direction opposite to said first direction; wherein said method includes the steps of:

circulating all messages on said network in said first direction through said primary transmitters, primary receivers, and primary cabling means during one set of spaced apart time intervals;

during another set of spaced apart time intervals that are interleaved with said one set, circulating all messages on said network in said second direction through said secondary transmitters, secondary receivers, and secondary cabling means; and

routing said messages through a single error detection circuit in each station when they are circulating in said first direction on said primary loop, and routing said messages through the same error detection circuit when they are circulating in said second direction on said secondary loop.

-13-

2.      A method according to claim 1 and further including the steps of setting an error flag bit in a message as the message circulates through a station and incrementing a counter in the station if the station's error detection circuit detects an error while the error flag bit is not set.

3.      A method according to claim 1 and further including the steps of detecting and correcting errors in said messages as they pass through each station.

4.      A method according to claim 1 and further including the steps of counting the total number of messages received, simultaneously counting the number of messages in which errors are first detected, and setting an indicator that preventive maintenance is needed if the ratio of the two counts exceeds a predetermined limit.

5.      A method according to claim 1 and further including the step of changing the direction of said messages through each of said stations from said first to said second direction, and vice versa, by circulating a predetermined message through each station and responding to the same upon its receipt.

-14-

6.      A method according to claim 5 and further including the step of initiating and terminating the circulation
of said predetermined message from a selected one of said
stations.


7.      A method according to claim 6 and further including the step of performing said initiating step with a
uniform regularity such that said messages circulate in
said first and second directions with substantially equal
duration.


8.      A method according to claim 1 and further including the steps of coupling each station's secondary receiver
to its secondary transmitter while messages circulate via
the primary components during said one set of time intervals; and coupling each station's primary receiver to its
primary transmitter while messages circulate via the
secondary components during said another set of time
intervals.


9.      A method according to claim 8 and further including the step of coupling, during said another set of time
intervals, the secondary receiver of a first station to its
primary transmitter, and simultaneously coupling the
primary receiver of a second station to its secondary
transmitter.

10.    A method of operating a local area network of the type that includes a plurality of stations; each station having a primary transmitter, a primary receiver, a secondary transmitter, and a secondary receiver; said network also including a primary cabling means coupling the primary transmitters of said stations to the primary receivers such that said stations are serially intercoupled in a loop in a first direction, and a secondary cabling means coupling the secondary transmitters of said stations to the secondary receivers such that said stations are serially intercoupled in a loop in a second direction opposite to said first direction; wherein said method includes the steps of:

circulating all messages on said network in said first direction through said primary transmitters, primary receivers, and primary cabling means;

recognizing a predetermined one of said messages in each of said stations as it circulates therethrough; and

in response to said recognizing step, changing the message circulation direction from said first to said second direction by utilizing said secondary transmitters, secondary receivers, and secondary cabling means to circulate messages.


11.    A method according to claim 10 and further including the step of routing said messages through respective error detection means in each station when said messages are circulating in said first direction, and also routing said messages through the same error detection means when they are circulating in said second direction.

-16-

12.     A method of operating a local area network of the type that includes a plurality of stations that are serially intercoupled in a loop; wherein said method includes the steps of:

circulating all messages around said loop in a first direction through respective primary transmitters, primary receivers, and primary cabling means in each station during one set of time intervals; and

utilizing respective secondary transmitters, secondary receivers, and secondary cabling means in each station to circulate all messages in a second direction around said loop during another set of time intervals that are interleaved with said one set.

**FIG.1A.**

**FIG.1B.**

**FIG.2.**

<u>Prior Art</u>

0189192

2/3

**FIG.3A.**

**FIG.3B.**

**FIG.3C.**

**FIG.3D.**

**FIG.3E.**

**FIG.3F.**

0189192

3/3

# FIG.4.

# FIG.5.

# EUROPEAN SEARCH REPORT

European Patent Office

Application number

EP 86 10 0834

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 472 898 (JEUMONT-SCHNEIDER) * Page 1, line 27 - page 2, line 2; page 3, line 32 - page 4, line 11; figures 2,3 * | 1,10-12 | H 04 L 11/16 |
| A | | 5 | |
| Y | FR-A-1 383 685 (ELLIOTT BROTHERS) * Page 1, left-hand column, lines 9-18 and right-hand column, lines 16-28; page 2, right-hand column, lines 30-38 * | 1,10-12 | |
| X | HITACHI REVIEW, vol. 31, no. 3, June 1982, pages 125-130, Tokyo, JP; J. KASHIO et al.: "32 Mb/s optical fiber loop network: H-8644" * Page 130, right-hand column, lines 2-10 and left-hand column, lines 3-19; figures 1,7 * --- -/- | 10 | TECHNICAL FIELDS SEARCHED (Int. Cl.4)  H 04 L H 04 M H 04 B |

The present search report has been drawn up for all claims

| Place of search | Date of completion of the search | Examiner |
|---|---|---|
| THE HAGUE | 17-04-1986 | VAN DEN BERG,J.G.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

0189192

European Patent Office

**EUROPEAN SEARCH REPORT**

Application number

EP 86 10 0834

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl.4) |
| A | JOURNAL OF TELECOMMUNICATION NETWORKS, vol. 3, no. 2, 1984, pages 69-88, International Business Machines Corp., Rockville, Maryland, US; R.C. DIXON et al.: "A token-ring network for local data communications" * Page 85, left-hand column, lines 7-28; page 86, left-hand column, lines 16-23; figure 12 * | 2,4 | |
| A | US-A-4 385 392 (ANGELL et al.) * Column 3, lines 42-46; column 4, lines 20-23, 32-35 * | 1,10-12 | |
| A | EP-A-0 094 179 (D.E.C.) * Page 4, lines 21-32; abstract * | 1,10-12 | TECHNICAL FIELDS SEARCHED (Int. Cl.4) |
| A | GB-A-2 094 110 (ELTRA) * Page 1, lines 69-73, 83-98 * | 3,4 | |
| Y | US-A-3 652 798 (McNEILLY et al.) * Column 3, lines 12-35; column 4, lines 11-16; abstract * | 1,10, 12 | |
| A | | 8,9 | |
| | --- -/- | | |

The present search report has been drawn up for all claims

| Place of search | Date of completion of the search | Examiner |
|---|---|---|
| THE HAGUE | 17-04-1986 | VAN DEN BERG, J.G.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

**European Patent Office**

**EUROPEAN SEARCH REPORT**

## DOCUMENTS CONSIDERED TO BE RELEVANT

Page 3

| Category | Citation of document with indication, where appropriate, of relevant passages | Relevant to claim | CLASSIFICATION OF THE APPLICATION (Int. Cl.4) |
|---|---|---|---|
| A,P | PATENTS ABSTRACTS OF JAPAN, vol. 9, no. 65 (E-304) [1788], 26 March 1985; & JP - A - 59 204 339 (MATSUSHITA DENKI SANGYO K.K.) 19-11-1984 * Abstract * | 10,12 | |
| | --- | | |
| Y | US-A-4 463 350 (KAJIURA) * Column 1, line 46 - column 2, line 14; column 5, line 61 - column 6, line 2; figure 1 * | 1,10, 12 | |
| | ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 17-04-1986 | VAN DEN BERG, J.G.J. |